# EUROPÄISCHE PATENTSCHRIFT

(11) **EP 2 759 878 B1**
(45) Veröffentlichungstag und Bekanntmachung des Hinweises auf die Patenterteilung: **05.06.2019**
(21) Anmeldenummer: 14401005.5
(22) Anmeldetag: 24.01.2014
(51) Int. Cl.: G03B 17/08, G03B 17/56, H04N 7/18

(54) **Einrichtung zur Fischbeobachtung**
Device for fish observation
Dispositif pour l'observation des poissons

(30) Priorität: 25.01.2013 DE 102013100750
(43) Veröffentlichungstag der Anmeldung: 30.07.2014
(73) Patentinhaber: Heinz, Sebastian, 01809 Heidenau (DE)
(72) Erfinder: Heinz, Sebastian, 01809 Heidenau (DE)
(74) Vertreter: Hofmann, Klaus

(56) Entgegenhaltungen:
- WO-A1-2011/055099
- WO-A2-2011/143622
- CN-A- 102 006 464
- DE-A1- 4 329 466
- DE-A1- 10 310 550
- FR-A1- 2 938 351
- FR-A1- 2 948 523
- US-B1- 6 262 761

## Beschreibung

Die Erfindung betrifft eine Einrichtung zur Fischbeobachtung mittels einer Unterwasserkamera, insbesondere zur Live-Unterwasserbeobachtung an Angelplätzen. Mit der Einrichtung werden eine Aufnahme und eine Übertragung von Bildinhalten unter Wasser an ein Empfängermodul außerhalb des Wassers zur zeitgleichen Anzeige und möglichen Speicherung des Bildmaterials von einer oder mehreren Unterwasserkameras über einen sehr langen Zeitraum möglich.

Unterwassergehäuse für Kameras werden beispielsweise in DE 40 31 134 A1 und DE 37 28 735 A1 beschrieben. Derartige Unterwassergehäuse beziehen sich auf die Nutzung von eigentlich nicht unterwassertauglichen Kameras in speziellen Gehäusen für die Nutzung unter Wasser. Dabei handelt es sich um eine temporäre mobile Nutzung unter Wasser entsprechend der Akkulaufzeit der Kameras und die Speicherung der aufgenommenen Bildinhalte. Es werden sowohl Einzelbilder als auch Videoaufnahmen auf einem Speichermedium in der Kamera aufgezeichnet. Diese werden mobil an der Person geführt und eignen sich aufgrund der Scheuchwirkung durch den Menschen nicht zur kontinuierlichen Betrachtung von Fischen.

Ein schwimmfähiges Gehäuse für die Aufnahme handelsüblicher Kameras ist in US 3,643,566 A beschrieben.

Die vorgenannten Veröffentlichungen beziehen sich lediglich auf verschiedenste Unterwassergehäuse und nicht auf eine Verfahrensweise mit zeitgleicher Übertragung an ein Empfängermodul außerhalb des Wassers. Dadurch sind keine zeitnahen Ansichten außerhalb des Wassers möglich, was beispielsweise bei einer Beobachtung einer Tiergeburt unter Wasser ein sofortiges Einschreiten bei Komplikationen unmöglich macht. Zudem ist eine zeitlich nachgelagerte Ansicht der gespeicherten Unterwasseraufnahmen nur auf den sehr kleinen integrierten Bildschirmen oder mithilfe zusätzlicher Bearbeitungs- und Anzeigegeräte, wie PCs, möglich, was zu einer weiteren Verzögerung, einer komplexeren Bearbeitung und zusätzlichem manuellen Aufwand führt. Bei den verschiedensten Modellen von Kameras für Unterwasseraufnahmen beträgt die maximale Betriebsdauer im Dauerbetrieb ca. 2-3 Stunden.

Für eine Live-Unterwasserbeobachtung sind weiterhin Unterwasserkameras mit Kabelanbindung bekannt. Eine Unterwasserkamera zur Live-Unterwasserbeobachtung außerhalb des Wassers, jedoch mit Hilfe einer Kabelüberleitung, wird beispielsweise in DE 10 2011 017 160 A1 beschrieben. Durch die Kabelübertragung ist die Distanz zum Anzeigemodul auf einige Meter begrenzt, in vorgenannter Veröffentlichung auf ca. 5 m. Darüber hinaus sind Unterwasserkameras käuflich zu erwerben, die bereits über eine Übertragung von Bildinhalten mit Hilfe von bis zu 100 m langen Kabeln verfügen.

Bei der Bildübertragung der Bildinhalte per Kabel ist der Einsatzradius durch die Kabellänge von 5 - 100 m stark beeinträchtigt und ermöglicht keine beliebige Nutzung in weiten Distanzen ab 100 m. Zudem können Unterwasserhindernisse zwischen Kamera und Anzeigemodul die Nutzung einer Unterwasserkamera mit Kabel unmöglich machen, beispielsweise Schiffsverkehr, versunkene Bäume oder zu starke Unterwasserströmungen. Zudem ist die Ausbringung des verkabelten Kamerasystems mehr als schwierig, da beim kleinsten Ziehen am Kabel beim Auslegen die Kamera am Boden umkippen kann und damit die gewünschte Betrachtung unmöglich wird. Daraufhin muss die gesamte Installation so lang wiederholt werden, bis das Kabel ohne Umstürzen der Kamera ausgelegt werden kann. Mit zunehmender Länge des Kabels verschlechtert sich außerdem die Bildqualität enorm. Außerdem ist das Packmaß des Kamerasystems durch das zusätzlich notwendige Kabel wesentlich größer und schwerer. Ein Kabel von 100 m wiegt zusätzlich ca. 10 Kg und ist nicht mehr im dazugehörigen Koffer unterbringbar. Beim Aufbau am Wasser ist ein langes Kabel aufgrund von Verhedderungen und Knoten im Kabel bei Wind und Strömung sehr unhandlich.

Bisherige Unterwasserkameras mit Kabelanschluss werden extern über das Kabel von außen mit Strom versorgt. Dies ermöglicht eine längere Nutzung als bei herkömmlichen Kameras in Unterwassergehäusen, die aufgrund des Platzmangels innerhalb der Kamera auf leistungsschwächere Akkumulatoren zurückgreifen müssen.

Anderweitige Unterwasserkameras für Taucher bzw. nicht unterwassertaugliche Kameras in Unterwassergehäusen werden zwar durch Akkumulatoren direkt an der Kamera betrieben, jedoch eignen sich diese nicht für eine kontinuierliche Beobachtung einer Lokation, sondern der mobilen Momentaufnahme und werden durchgehend durch den Menschen transportiert und gesteuert. Selbst wenn man diese Unterwasserkameras zweckentfremden würde und diese stationär aufstellt, müsste man kontinuierlich aufnehmen, ohne jedoch zu wissen, ob das Beobachtungsobjekt tatsächlich vor der Kamera ist oder nicht. Dies würde zudem die Nutzungsdauer dieser eigentlich mobilen Unterwasserkamera weiter reduzieren. Zusätzlich müsste man bei dieser Verwendung zur Installation und zum Abbau der stationär verwendeten mobilen Unterwasserkamera jeweils unter Wasser tauchen, was mit erheblichem zusätzlichen Aufwand verbunden wäre und in keiner Relation zur möglichen Aufnahme des Beobachtungsobjektes steht.

Durch die geringe Größe und das geringe Gewicht dieser Kameras, aufgrund der gewünschten mobilen Nutzung, ist auch die Größe und das Gewicht des Akkumulators auf ein Minimum beschränkt und beträgt nur wenige Stunden. Damit eignen sich diese Kameras schon aufgrund ihrer kurzen Nutzungsdauer nicht für den Anwendungsbereich der hier beschriebenen Lösung. Zudem ist bei diesen Kameras auch keine zeitgleiche Ansicht der aufgenommenen Inhalte außerhalb des Wassers möglich, sondern nur zeitverlagert. Derzeit sind keine Möglichkeiten bekannt, bei denen mehrere Kameras mit einem Empfängermodul zeitgleich genutzt werden können. Das bedeutet, dass bisher lediglich die Anzeige einer Kamera auf einem Empfängermodul zeitgleich, und zwar nur per Kabel möglich ist. Für den Bediener ist das Auslegen der Unterwasserkamera sehr stark vom Zufall abhängig, wann und ob das anvisierte Beobachtungsobjekt vor der Kamera zu sehen sein wird. Die Wahrscheinlichkeit der Beobachtung des Zielobjektes steigt mit jeder eingesetzten zusätzlichen Kamera und durch die Möglichkeit der Nutzung der Unterwasserkameras von über 48 Stunden, ohne den Wechsel von Akkumulatoren.

In US 6,738,314 B1 wird ein autonomes Mienensuch- und -neutralisationssystem beschrieben, bei dem ein motorisiertes Unterwasserfahrzeug mit einer Kamera oder Sensoren ausgestattet ist. Mittels einer Kabelverbindung werden die Signale zu einer Boje übermittelt, die die Signale per Funk an eine Station zur Auswertung überträgt.

DE 43 29 466 A1 beschreibt den Einsatz eines Videosenders und eines Videoempfängers anstelle eines Kabels in Verbindung mit einer in einem Unterwassergehäuse befindlichen Videokamera zwecks Übertragung von Video- und Audiosignalen zu Aufnahme- und Überwachungszwecken. Der Sender kann in einem wasserdichten, an der Wasseroberfläche freischwimmenden Boot, einer Boje oder Plattform untergebracht sein. Die Kamera wird von einem Taucher bedient. Bei Ortsveränderungen wird die an der Oberfläche schwimmende Boje mitgezogen.

In DE 10 310 550 A1 wird ein Gewässeruntersuchungssystem mit einer Basisstation einschließlich einer Fernsteuerung und eine schwimmende Untersuchungsvorrichtung beschrieben. Ohne Störungen des Gewässers sollen Daten des physikalischen, chemischen und strukturellen Gewässerzustandes sowie von Unterwassergeländeformationen einer Auswertung zugeführt werden können und/oder sichtbar darstellbar sind. Die Untersuchungsvorrichtung besteht im Wesentlichen aus einem unbemannten Schwimmkörper, insbesondere einem katamaranähnlich angeordneten Bootskörper, und mindestens einem unbemannten, angetriebenen Unterwasserkörper. Der Schwimmkörper und/oder der Unterwasserkörper sind mit einem Antrieb und mit der Fernsteuerung über eine Signalübertragungseinrichtung verbunden.

US 2005/0200699 A1 offenbart ein Multifunktionskabel, eine Ausrüstung zum Fischen und ein Unterwasser-Bild-Video-System zur Übertragung von Signalen von Geräuschen, Überschall-Wellen, Temperaturinformationen oder Steuerbefehlen. Bedient werden die Gerätschaften durch einen Taucher. Die Signalübertragung erfolgt per Kabel an eine Boje und von dort zu einem Boot.

Ein Live-Videoübertragungssystem per Funk wird auch in US 6525762 B1 beschrieben. Um das Übertragungskabel zwischen der Unterwasserkamera und einer Boje schwimmfähig zu halten, sind an ihm Schwimmer angeordnet.

WO 2011/143622 A2 beschreibt ein Panorama-Bildaufnahmesystem und ein Verfahren dazu, welches die Erfassung von Unterwasser-Panorama-Bildern erleichtert. Das Panorama-Kamerasystem wird unter Wasser zur Stabilisierung eingesetzt, um die Auswirkungen der Bewegung eines Seefahrzeuges zu reduzieren, wobei ein ausfahrbarer Arm durch einen Stabilisator gehalten wird.

FR 2 948 523 A1 zeigt ein autonomes Unterwasservideogerät. Die Vorrichtung weist ein abgedichtetes Gehäuse zur Aufnahme einer Videokamera auf. Das Gehäuse ist an einer auf Standfüßen stehenden Basisstation befestigt. Zur Standortbestimmung können Positionsanzeigen vorgesehen sein.

Die vorgenannten Lösungen sind für Angelplätze nicht gut oder völlig ungeeignet, da sie entweder störende Einflüsse für eine Unterwasserfischbeobachtung verursachen oder keine genaue Positionsanzeige ermöglichen.

In US 5,005,309 A wird eine Positionsanzeige von Schwimmkörpern für Angeln mittels daran befestigter Lichtquellen beschrieben.

Eine beleuchtete Pose wird in DE 10 2008 058 728 A1 beschrieben.

Aufgabe der Erfindung ist es, eine Einrichtung zur Fischbeobachtung mittels einer in einem Unterwassergehäuse untergebrachten Unterwasserkamera vorzuschlagen, die eine störungsfreie und positionsgenaue Unterwasserbeobachtung für Angelplätze über weite Entfernungen und über einen möglichst langen Zeitraum ermöglicht.

Erfindungsgemäß wird die Aufgabe durch die Merkmale des Anspruches 1 gelöst. Ausgestaltende Merkmale sind in den Unteransprüchen 2 bis 8 beschrieben.

Die Einrichtung zur Fischbeobachtung mittels einer in einem Unterwassergehäuse vor einem Sichtfenster angeordneten Kamera ist gekennzeichnet durch eine im Unterwassergehäuse angeordnete, die Kamera mit Strom versorgende externe Stromquelle. Von der Kamera führt ein Videokabel zu einem schwimmfähigen Funkmodul, das geeignet ist, die Funksignale von einer Funkantenne zu einem Empfängermodul zu übertragen. In einer speziellen Ausführung kann das Videokabel ausfahrbar in einer arretierbaren Aufrollvorrichtung angeordnet sein.

Das Funkmodul hat gleichzeitig die Funktion einer Positionsanzeige. Am Funkmodul können auch zusätzliche Mittel zur Positionsanzeige angeordnet sein. Zur Verwendung kommen dafür beispielsweise Stäbe, Fahnen oder Wimpel sowie Lampen als optische Signalgeber oder bekannte akustische Signalgeber.

Durch unterschiedlich lange Kabeladapter kann der Einsatz in verschiedenen Tiefen ermöglicht werden. Das Videokabel wird in oder an einem Gestänge geführt, das am Unterwassergehäuse und am schwimmfähigen Funkmodul befestigt ist. Als Gestänge können feste oder teleskopierbare Rohre aus Kunststoff oder Leichtmetall verwendet werden.

Durch die beschriebene Gestängefixierung kann das Unterwassergehäuse stabil an einer definierten Stelle unter dem Schwimmkörper gehalten und nicht abgetrieben werden. Zudem können durch den Stab eine Markierung des beangelten Futterplatzes und eine genaue Positionsanzeige der Kamera ermöglicht werden. Dadurch wird eine punktgenaue Ablage des Angelköders vor der Kamera möglich.

Werden am Gestänge von Hand betätigbare Mittel zur Positionierung angebracht, dann ist durch den Benutzer, beispielsweise von einem Boot aus, eine einfache Positionierung am dafür vorgesehenen Ort möglich. Von Hand betätigbare Mittel können Griffe, Schlaufen oder Stäbe sein, die bei Bedarf gleichzeitig als Positionsanzeige dienen können.

Das Gestänge kann Hohlräume enthalten und luftdicht abgeschlossen sein. Das hat den Vorteil, dass die Antenne stets gerade aus dem Wasser schaut und somit eine optimale Bildübertragung gewährleistet ist. Wenn die Antenne schräg stünde, träfen die Funksignale nur auf die Wasseroberfläche und würden von dieser absorbiert, so dass beim Empfängermodul keine oder nur gestörte Signale mehr ankämen.

Das Gestänge ist am Funkmodul und/oder am Unterwassergehäuse drehbar und/oder kippbar befestigt. Dies kann beispielsweise mittels eines Kugelgelenkes erfolgen.

Die Unterwasserkamera muss stets ruhig auf dem Gewässerboden stehen, um eine anschauliche Bildübertragung auch bei Wind und Wellen zu gewährleisten. Gleichzeitig sollte das Gestänge aber genau wegen Wind und Wellengang beweglich sein. Um dabei nicht die Sicht der Kamera zu beeinflussen, ist das Gestänge von der Kamera an aufwärts zur Wasseroberfläche beweglich bzw. kippbar. Wenn die Angelschnur mit dem Fisch hinter die Kamera gerät, ist dabei von Vorteil, dass das Gestänge dem Widerstand der Angelschnur nachgibt und sich zur Seite drücken lassen kann. Dabei kann auch das schwimmfähige Funkmodul durch die Angelschnur unter Wasser gedrückt werden und gibt daraufhin die Angelschnur wieder frei. Durch die im Gestänge enthaltene Luft richtet sich der Stab inklusive dem schwimmfähigen Funkmodul wieder auf und ist wieder voll funktionsfähig. Diese Funktionsweise ist nur mit einem steifen Stab gewährleistet und ist nicht mit einer Kabellösung gegeben. Bei der Benutzung einer Kabelverbindung der Kamera zum Schwimmkörper kann die Angelschnur nicht mehr freigegeben werden und würde das System in tieferes Wasser ziehen, was in einem Totalverlust des Systems enden könnte.

In der hier beschriebenen Lösung mit einem Gestänge wird der Zug auf das Unterwassergehäuse sowie auf einen externen Batterieblock über das massive Stabsystem aufgenommen und es gibt folglich keinerlei Kräfte, die auf die Kabel einwirken, wodurch auch diese Nachteile einer reinen Kabellösung vollständig behoben werden.

Für einen sicheren Stand auf dem Gewässerboden sind unterhalb des Unterwassergehäuses ein oder mehrere Standfüße befestigt, die einerseits die Standfestigkeit gewährleisten und andererseits einen gewählten Abstand zum Gewässerboden einhalten, um eine ungewünschte Kollision mit am Gewässerboden befindlichen Pflanzen oder Gegenständen zu vermeiden. Es besteht die Möglichkeit, dass die externe Stromquelle in einem großen, unterhalb des Unterwassergehäuses angeordneten Standfuß oder, falls mehrere Standfüße vorgesehen sind, in mindestens einem der Standfüße integriert ist. Durch die relativ schweren Akkus wird der Schwerpunkt in den Fußbereich verlegt und das Unterwassergehäuse erhält eine hohe Standsicherheit.

In einer Ausführungsform kann die Kamera im Unterwassergehäuse drehbar befestigt sein. Um diesen Vorteil zu nutzen, sollte das Sichtfenster so ausgebildet sein, dass es weitgehend über den Schwenkbereich der Kamera reicht. Diese Drehung kann sowohl an der Sendereinheit wie auch an der Empfängereinheit gesteuert werden.

Zum Einsatz können sowohl handelsübliche, hochauflösende HD-Videokameras als auch Infrarotkameras kommen.

An Land befindet sich, beispielsweise in einem Koffer, das Empfängermodul mit einem Monitor und einer Stromversorgung. Eine integrierte Umschaltfunktion ermöglicht das Ansteuern mehrerer Kameras mit unterschiedlichen Frequenzen. Zudem kann durch die zeitgleiche Ansicht der aufgenommenen Bildinhalte der Unterwasserkamera am Empfängermodul per manueller Bedienung am Empfängermodul über Aufnahme oder Nichtaufnahme des angezeigten Bildmaterials entschieden werden. Es ist eine zeitgleiche Ansicht des Live-Geschehens und der aufgenommenen Bildinhalte durch mehrere verbaute Bildschirme möglich. Außerdem erfolgt bei der Verwendung mehrerer Kameras eine Reduzierung des Zufallsfaktors.

Mit der Einrichtung zur Fischbeobachtung ist eine störungsfreie Unterwasserbeobachtung über weite Entfernungen und über einen sehr langen Zeitraum möglich.

Nachfolgend wird die Erfindung an Ausführungsbeispielen näher erläutert.

Es zeigen:
- Fig. 1: Einrichtung zur Fischbeobachtung
- Fig. 2: Schnitt durch ein Unterwassergehäuse
- Fig. 3: Unterwassergehäuse mit Standfüßen.

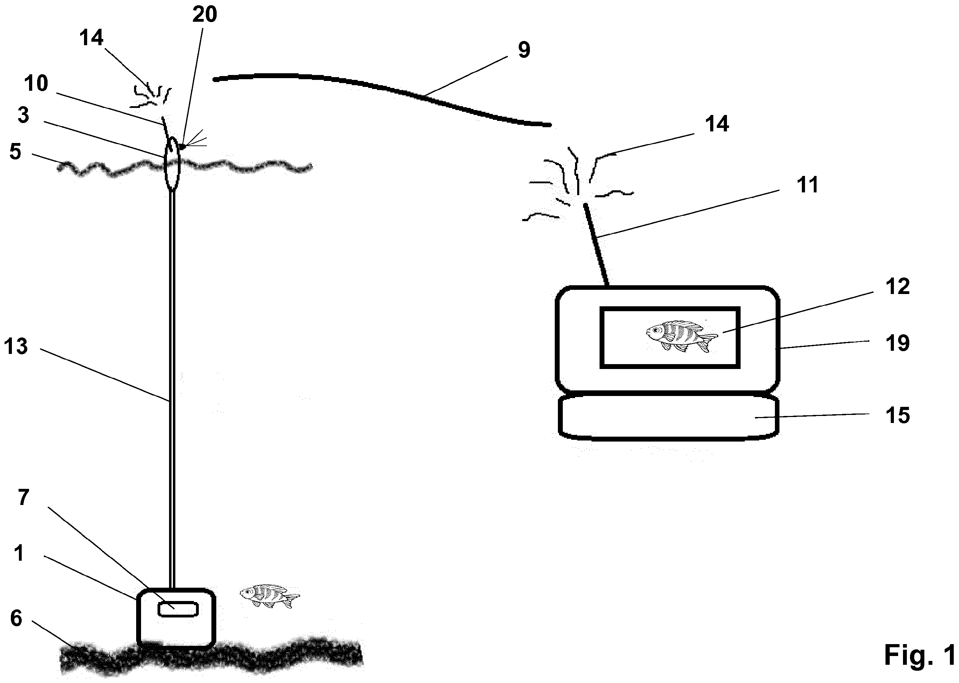

In Fig. 1 ist eine Einrichtung zur Live-Videoübertragung für eine Fischbeobachtung in einem Angelgewässer mittels einer Kamera 2 dargestellt. Die Einrichtung ist wie folgt aufgebaut.

Als Kamera 2 wird beispielsweise eine HD-Actioncam im oberen Bereich eines Unterwassergehäuses 1 in dafür vorgesehene Halterungen lösbar eingeklipst. Kunden, die bereits eine der vielen infrage kommenden Kameras 2 besitzen, können diese auch gleich für den hier beschriebenen Einsatzzweck verwenden.

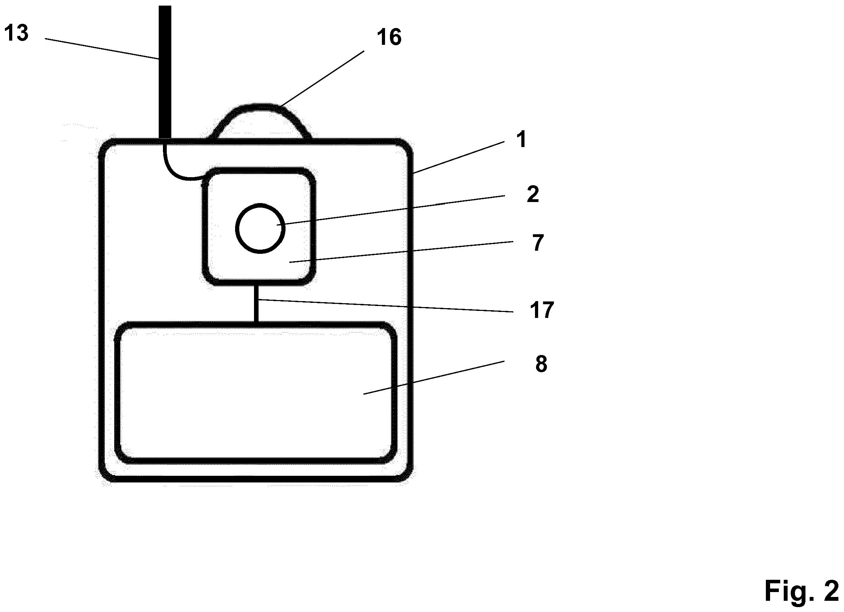

Die Kamera 2 wird über ein Stromkabel 17 von einer zusätzlichen Stromquelle 8 mit Strom versorgt. Als Stromquelle 8 dienen mehrere Akkus, die unter der Kamera 2 befestigt werden. In Fig. 2 ist der Sitz der Akkus und der Kamera 2 im Unterwassergehäuse 1 ersichtlich. Die externe Stromquelle 8 hat eine so hohe Kapazität, dass eine Stromversorgung über einen sehr langen Zeitraum von mehreren Tagen erfolgen kann. Der erhöhte Sitz der Kamera 2 im Unterwassergehäuse 1 sorgt unter Wasser für bessere Aufnahmen, als wenn die Kamera 2 direkt am Gewässerboden 6 sitzen würde. Damit können Behinderungen der Sicht durch beispielsweise Schlamm oder Krautbewuchs entgegnet und die Höhe der Kamera beliebig variiert werden. Im Unterwassergehäuse 1 befindet sich im Bereich des Kameraobjektives als Sichtfenster 7 eine Klarsichtscheibe.

Zwischen der Kamera 2 und dem Unterwassergehäuse 1 ist ringsum ein solcher Abstand vorgesehen, dass Luft zirkulieren kann, so dass beispielsweise Anti-Beschlag-Pads Platz finden und verhindern, dass durch die Wärme der Kamera 2 selbst und der ggf. kalten Wand des Unterwassergehäuses 1 die Sicht behindert wird.

Durch eine abgedichtete Bohrung im Unterwassergehäuse 1 tritt ein abgeschirmtes Videokabel 4 (AV-Kabel) nach außen und führt so an die Wasseroberfläche 5 zu einem schwimmfähigen Funkmodul 3.

In Fig. 1 ist als Ausführungsvariante dargestellt, dass ein zusammenschraubbares oder teleskopierbares Gestänge 13 aus Kunststoff oder Metall direkt am Unterwassergehäuse 1 befestigt ist, an dem wiederum das Videokabel 4 angeklipst wird. Im dargestellten Beispiel ist das Videokabel innerhalb des Gestänges 13 verlegt. Dies verhindert, dass sich der Fisch nach einem Biss mit dem Videokabel 4 verfangen kann und die Angelschnur einfach am Gestänge 13 entlang gleitet.

Um bei verschiedenen Gewässertiefen flexibel zu sein, sind vorkonfektionierte Kabellängen mit wasserdichten Steckern vorgesehen, die zwischen Unterwassergehäuse 1 und Funkmodul 3 gesteckt werden können. Das Gehäuse des Funkmoduls 3 wird passend direkt auf das Gestänge 13 geschraubt. Ein Befestigungshaken 16 kann als Anschlagmittel für das Gestänge 13 und/oder gleichzeitig als Handgriff dienen.

Zur Funkübertragung dient ein 5,8-GHz-Transmitter, welcher ab dem Anschalten der Einrichtung über eine integrierte Funkantenne 10 dauernde Funksignale 14 sendet, welche dann von der Empfangsantenne 11 eines Empfängermodules 19 empfangen und an einem Monitor 12 wiedergegeben werden. Der Monitor 12 befindet sich vorzugsweise in einem Koffer 15 mit integrierter Stromversorgung. Somit kann stets beim Einschalten des Monitors 12 gesehen werden, was auf der angesteuerten Kamera 2 vor sich geht. Über beispielsweise einen Drehschalter kann die Frequenz geringfügig geändert werden, um eine zweite oder noch mehr Kameras 2 ansteuern zu können.

Um den Liegeplatz der Kamera 2 bzw. den vorab ausgesuchten Angelplatz, auf dem die Kamera 2 platziert wurde, bei Nacht wiederzufinden, befindet sich am Gehäuse des Funktransmitters als Signalgeber 20 für eine Positionsanzeige eine kleine LED zur optischen Wahrnehmung.

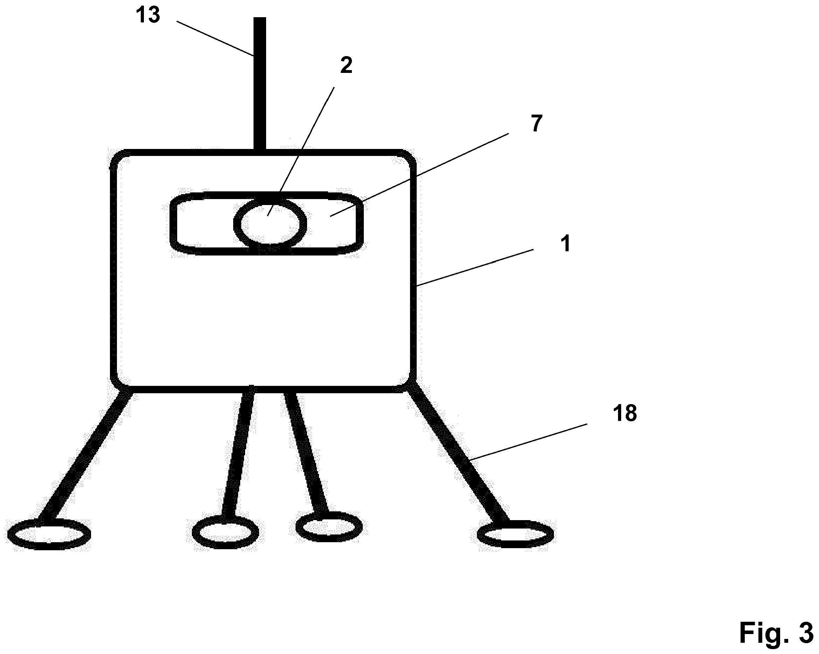

In Fig. 3 ist ersichtlich, dass am Boden des Unterwassergehäuses 1 4 Standfüße 18 befestigt sind, die es ermöglichen, das Unterwassergehäuse 1 in verschiedenen Abstufungen vom Gewässerboden 6 zu erheben, beispielsweise bei viel Bewuchs oder hohem Schlamm.

Eine weitere optionale Möglichkeit besteht darin, dass die Kamera 2 per Fernbedienung im Unterwassergehäuse 1 drehbar ist, um eine Rundumsicht zu ermöglichen. Dies wird durch eine spezielle Lagerung der Kamera 2 im Unterwassergehäuse ermöglicht.

Der Koffer 15 erfüllt mehrere Zusatzfunktionen, wie beispielsweise das Umschalten auf weitere ins System eingebundene Kameras, das Wiedergeben des TV-Programms durch einen integrierten DVBT-Empfänger, Computerspiele, das Bedienen des Monitors mittels Fernbedienung, das Laden von Akkus, wie z. B. von Mobiltelefonen oder den Stromquellen 8, sowie das Unterbringen der Kamera 2 und der als Stromquellen 8 dienenden Akkus in einem zugeschnittenen Schaumstoff.

Die zum Einsatz gebrachte Kamera 2 lässt sich auch leicht aus dem Unterwassergehäuse 1 entnehmen und separat verwenden.

Der Wechsel der Akkus nach beispielsweise 48 Stunden wird durch eine stabile Konstruktion des Unterwassergehäuses 1 mittels einfacher Verschraubungen gewährleistet. Das Einbinden einer oder mehrerer zusätzlicher Kameras in das bestehende System ist innerhalb von wenigen Sekunden möglich und sehr einfach zu handhaben. Lästige Video-Schleppkabel, die bei einem Verrücken der Beobachtungseinrichtung die Pflanzen und Tiere unter Wasser stören oder beschädigen können, werden vermieden.

In erster Linie wird es dem versierten Naturfreund mit dieser Einrichtung ermöglicht, sein Hobby aus einer ganz neuen Perspektive erleben zu können, und das ohne viel Aufwand, da sich die Kameras mittels Gestänge 13 sehr einfach und schnell am Gewässerboden 6 einbringen und die Sichtrichtung der Kameras ausrichten lassen. Des Weiteren werden dem Angler die Fehler seines Fischens sofort klar. Er kann beobachten, wie viele Fische ggf. an seinem Köder vorbeischwimmen oder bei einem Biss nicht richtig am Haken sitzen. Durch das schnelle Agieren auf derartige Erkenntnisse ist es nun möglich, den Erfolg beim Fischen enorm zu steigern oder die neuen Eindrücke zu erleben und zu genießen.

### Bezugszeichenaufstellung

1 Unterwassergehäuse
2 Kamera
3 Funkmodul
4 Videokabel
5 Wasseroberfläche
6 Gewässerboden
7 Sichtfenster
8 Stromquelle
9 Funkübertragung
10 Funkantenne
11 Empfangsantenne
12 Monitor
13 Gestänge
14 Funksignale
15 Koffer
16 Befestigungshaken
17 Stromkabel
18 Standfüße
19 Empfängermodul
20 Signalgeber

## Patentansprüche

1. Einrichtung zur Fischbeobachtung mittels einer in einem Unterwassergehäuse (1) vor einem Sichtfenster (7) angeordneten Kamera (2), wobei im oder am Unterwassergehäuse (1) eine die Kamera (2) mit Strom versorgende externe Stromquelle (8) angeordnet ist und von der Kamera (2) ein Videokabel (4) zu einem schwimmfähigen Funkmodul (3) führt, das geeignet ist, die Videosignale von einer Funkantenne (10) zu einem Empfängermodul (19) zu übertragen, **dadurch gekennzeichnet, dass** am Unterwassergehäuse (1) ein oder mehrere Standfüße (18) befestigt sind, das Videokabel (4) in oder an einem Gestänge (13) geführt wird, das am Unterwassergehäuse (1) und am schwimmfähigen Funkmodul (3) befestigt ist, wobei das Gestänge (13) am Funkmodul (3) und/oder am Unterwassergehäuse (1) drehbar und/oder kippbar befestigt ist, das Gestänge (13) teleskopierbar ist und das Videokabel (4) ausfahrbar in einer arretierbaren Aufrollvorrichtung angeordnet ist.

2. Einrichtung nach Anspruch 1, **dadurch gekennzeichnet, dass** zur Positionsanzeige am Funkmodul (3) Signalgeber (20) angeordnet sind.

3. Einrichtung nach Anspruch 1 oder 2, **dadurch gekennzeichnet, dass** am Gestänge (13) von Hand betätigbare Mittel zur Positionierung angebracht sind.

4. Einrichtung nach einem der Ansprüche 1 bis 3, **dadurch gekennzeichnet, dass** die externe Stromquelle (8) in mindestens einem der Standfüße (18) integriert ist.

5. Einrichtung nach einem der Ansprüche 1 bis 4, **dadurch gekennzeichnet, dass** die Kamera (2) im Unterwassergehäuse (1) drehbar befestigt ist und das Sichtfenster (7) weitgehend über den Schwenkbereich der Kamera (2) reicht.

6. Einrichtung nach einem der Ansprüche 1 bis 5, **dadurch gekennzeichnet, dass** die Kamera (2) eine Infrarotkamera ist.

7. Einrichtung nach einem der Ansprüche 1 bis 6, **dadurch gekennzeichnet, dass** das Gestänge (13) Hohlräume enthält und luftdicht abgeschlossen ist.

8. Einrichtung nach einem der Ansprüche 1 bis 7, **dadurch gekennzeichnet, dass** das Gestänge (13) am Funkmodul (3) und/oder am Unterwassergehäuse (1) mittels eines Kugelgelenkes befestigt ist.

## Claims

1. Device for observing fish by means of a camera (2) arranged in front of a viewing window (7) in an underwater housing (1), wherein an external power source (8), supplying the camera (2) with power, is arranged in or on the underwater housing (1) and a video cable (4) leads from the camera (2) to a buoyant radio module (3), which is suitable for transmitting the video signals from a radio antenna (10) to a receiver module (19), **characterized in that** one or more standing feet (18) are fastened to the underwater housing (1), the video cable (4) is routed in or on a linkage (13), which is fastened to the underwater housing (1) and to the buoyant radio module (3), wherein the linkage (13) is pivotably and/or tiltably fastened to the radio module (3) and/or to the underwater housing (1), the linkage (13) is telescopic and the video cable (4) is arranged extendably in an arrestable roll-up device.

2. Device according to Claim 1, **characterized in that**, for position indication, signal transmitters (20) are arranged on the radio module (3).

3. Device according to Claim 1 or 2, **characterized in that** manually operable means for positioning are attached to the linkage (13).

4. Device according to one of Claims 1 to 3, **characterized in that** the external power source (8) is integrated in at least one of the standing feet (18).

5. Device according to one of Claims 1 to 4, **characterized in that** the camera (2) is pivotably fastened in the underwater housing (1) and the viewing window (7) extends largely over the panning range of the camera (2).

6. Device according to one of Claims 1 to 5, **characterized in that** the camera (2) is an infrared camera.

7. Device according to one of Claims 1 to 6, **characterized in that** the linkage (13) contains cavities and is closed off in an airtight manner.

8. Device according to one of Claims 1 to 7, **characterized in that** the linkage (13) is fastened to the radio module (3) and/or to the underwater housing (1) by means of a ball joint.

## Revendications

1. Dispositif pour l'observation des poissons au moyen d'une caméra (2) disposée dans un boîtier sous-marin (1) devant une fenêtre d'observation (7), dans lequel une source de courant externe (8) alimentant la caméra (2) est disposée dans ou sur le boîtier sous-marin (1) et un câble vidéo (4) conduit de la caméra (2) à un module radio flottant (3) qui est approprié pour transmettre les signaux vidéo d'une antenne radio (10) vers un module récepteur (19), **caractérisé en ce qu'**un ou plusieurs pieds de fixation (18) sont fixés au boîtier sous-marin (1), **en ce que** le câble vidéo (4) est acheminé dans ou sur une tringlerie de liaison (13) qui est fixée au boîtier sous-marin (1) et au module radio flottant (3), dans lequel la tringlerie de liaison (13) est fixée de manière à pouvoir tourner et/ou basculer sur le module radio (3) et/ou sur le boîtier sous-marin (1), la tringlerie de liaison (13) étant télescopique et le câble vidéo (4) étant disposé de manière extensible dans un dispositif d'enroulement pouvant être verrouillé.

2. Dispositif selon la revendication 1, **caractérisé en ce que** des générateurs de signaux (20) sont disposés sur le module radio (3) pour indiquer la position.

3. Dispositif selon la revendication 1 ou 2, **caractérisé en ce que** des moyens de positionnement actionnables manuellement sont fixés à la tringlerie de liaison (13).

4. Dispositif selon l'une des revendications 1 à 3, **caractérisé en ce que** la source de courant externe (8) est intégrée à au moins l'un des pieds (18).

5. Dispositif selon l'une des revendications 1 à 4, **caractérisé en ce que** la caméra (2) est montée tournante dans le boîtier sous-marin (1) et **en ce que** la fenêtre d'observation (7) s'étend jusqu'au-dessus de la zone de pivotement de la caméra (2).

6. Dispositif selon l'une des revendications 1 à 5, **caractérisé en ce que** la caméra (2) est une caméra infrarouge.

7. Dispositif selon l'une des revendications 1 à 6, **caractérisé en ce que** la tringlerie de liaison (13) contient des cavités et est fermée de manière étanche à l'air.

8. Dispositif selon l'une des revendications 1 à 7, **caractérisé en ce que** la tringlerie de liaison (13) est fixée au module radio (3) et/ou au boîtier sous-marin (1) au moyen d'une articulation à rotule.
